# EUROPEAN PATENT SPECIFICATION

(11) **EP 0 736 189 B1**
(45) Date of publication and mention of the grant of the patent: **15.05.2002**
(21) Application number: 94917247.2
(22) Date of filing: 22.12.1993
(51) Int. Cl.: G02B 6/16, G01C 19/72, G02B 6/44

(54) **OPTICAL FIBER COIL AND METHOD OF WINDING**
SPULE FÜR OPTISCHE FASER UND VERFAHREN ZUM AUFWICKELN
BOBINE DE FIBRE OPTIQUE ET PROCEDE POUR L'ENROULER

(43) Date of publication of application: 09.10.1996
(73) Proprietor: HONEYWELL INC., Minneapolis Minnesota 55408 (US)
(72) Inventor: PAGE, Jerry, L., Alto, MI 49302 (US); BINA, David, R., Grand Rapids, MI 49508 (US); MILLIMAN, Douglas, Hastings, MI 49058 (US)
(74) Representative: Fox-Male, Nicholas Vincent Humbert
(86) International application number: US9312454
(87) International publication number: WO9517693

(56) References cited:
- EP-A- 0 516 340
- EP-A- 0 616 196
- JP-A- 1 305 310
- US-A- 4 699 451
- US-A- 4 883 337
- US-A- 4 928 894
- US-A- 5 168 539
- US-A- 5 245 687
- CHOMAT M.: 'Efficient suppression of thermally induced nonreciprocity in fiber-optic Sagnac interferometers with nove double-layer winding' APPLIED OPTICS vol. 32, no. 13, 01 May 1993, pages 2289 - 2291

## Description

### Field of the Invention

This invention relates to optical fiber coils and to methods of manufacture thereof, and more particularly, to an improved coil pattern.

### Description of Related Art

Fiber optic sensor coils are used, inter alia, in fiber optic gyroscopes to provide an optical output signal used in determining rotation of a vehicle (e.g. an airplane) about an axis of rotation. A typical fiber optic gyroscope uses three sensor coils to sense rotation about each of three orthogonal axes. The fiber optic gyroscope is typically configured as a Sagnac interferometer including a light source providing an optical signal, a multi-turn coil of optical fiber, referred to as a fiber optic ring, and electronic read-out and control circuits. The optical signal is first applied to an optical beam splitter/combiner which provides two identical optical output signals, each of which is applied to one end of the fiber optic coil. The two optical signals travel through the coil in opposite directions and are recombined at the beam splitter/combiner. A rotation of the fiber optic coil about its wound, or longitudinal axis will result in a phase shift between the counter-propagatory optical signals traveling through the coil. This phase shift is known as the Sagnac effect phase shift. The Sagnac effect can be explained by relativistic theory which shows that a wave traveling through a rotating coil in the direction of rotation requires more time to traverse the path than a wave traveling opposite to the direction of rotation. This time difference is manifested by phase shift interference pattern of the recombined optical signal. In an optical gyro, the magnitude of the phase shift is determined by analysis of the recombined signal as applied to an output optical detector. The detector output is translated into electrical output signals representing rotation.

The phase shift detected at the output detector may be considered as consisting of two parts. The first part is the Sagnac effect phase shift. The other part of the detected phase shift is due to perturbations in the optical fiber caused by environmental factors. The Sagnac phase shift which defines the magnitude and direction of rotation is relatively small, such that any significant phase shift due to environmental factors may obscure an accurate reading of the Sagnac effect phase shift. It is therefore desirable to minimize the effect of environmental perturbations on the detected phase shift of the recombined optical signal.

The two optical signals emanating from the splitter/ combiner in response to the single optical input signal are in phase and are applied at opposite ends of the coiled fiber and traverse the fiber in opposite directions. The undesirable phase shift effects occur when environmental perturbations affect one of the light signals differently than the other. It is generally recognized that environmental perturbations cannot be eliminated, but that their effect can be minimized if these perturbations are applied equally to the counter propagatory light signals. A known approach to reducing the effect of environmental perturbations is to build a symmetry in the sensing coils. Known sensing coils include dipole, quadrupole, and octupole windings. In these coils the midpoint of a length of optical fiber is placed near one side flange of a spool and the two optical fiber segments emanating from the midpoint, referred to as the forward segment and the reverse segment, are then wound around the coil in opposite directions. In the case of a dipole, the forward and reverse segments are wound on the spool in alternating layers. In the quadruple, a layer of the forward segment is followed by two layers of the reverse segment, followed by two layers of the forward segment, and so on. In an octupole configuration, two layers of the reverse segment are sandwiched between two layers of the forward segment followed by another set of four layers in which two layers of the forward segment are sandwiched between layers of the reverse segment. All of these various configurations are attempting to introduce a symmetry such that an environmental perturbation of the coil will affect the counterpropagating light signals in the same manner. However, when the coil is built up of alternating layers or alternating pairs of layers of the forward and reverse segments, the forward and reverse segments are not necessarily affected in the same way by the environmental perturbations. This may be better understood by considering the nature of the environmental perturbations.

Environmental perturbations may be due to mechanical strain, vibration, shock and temperature changes. It is known, that two types of temperature perturbations have to be dealt with, namely, those due to radial temperature gradients and those due to axial temperature gradients. As the name implies, with a radial temperature gradient, the temperature varies radially such that an optical fiber segment adjacent the core of the spool is at a different temperature than fiber segments in layers which are a distance removed from the core of the spool. An axial gradient extends along the wound axis of the spool. It is therefore desirable to avoid significant axial and radial distances between segments of the optical fiber which are the same distance from the respective end points such that corresponding segments of the forward and reverse segment of the coil experience the same environmental perturbations.

A coil as defined in the preamble of claim 1 is shown in EP-A-0 616 196. Further reference is made to JP-A-1 305 310, EP-A-0 516 340 and US-A-4 928 894.

### SUMMARY OF THE INVENTION

These and other problems of the prior art are overcome in accordance with the present invention with a coil as defined in claim 1 and a method of winding an optical fiber coil as defined in claim 9.

Further aspects and preferred embodiments of the invention can be taken from the dependent claims.

### BRIEF DESCRIPTION OF THE DRAWING

The invention is described in detail in the following paragraphs with reference to the drawing in which:
FIG. 1 is a schematic representation of a cross-section of a portion of sensing coil constructed in accordance with the principles of this invention;
FIGS. 2 through 4 are alternate embodiments of the invention showing alternate coil winding patterns; and
FIG. 5 is a schematic representation of apparatus for winding a fiber optic coil in accordance with the invention.

### DETAILED DESCRIPTION

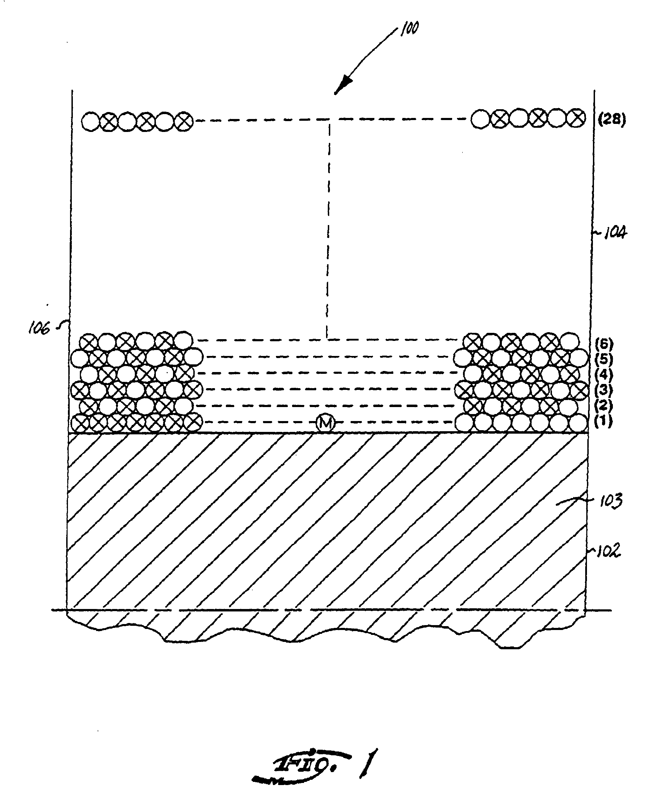

FIG. 1 is a schematic representation of a cross section of a sensing coil 100 wound on a spool 102 having a core 103 and opposing flanges 104, 106. The coil is constructed as an optical fiber sensing coil for use, for example, in a fiber optic gyro. The coil consists of a continuous fiber of a selected length having its midpoint adjacent the core of the coil and its ends exposed. The two optical fiber segments extending from the midpoint, referred to as the forward segment and the reverse segment, are wound on the spool in opposite directions. In use, as explained in the background of the invention, two identical optical signals are individually applied to opposite ends of the coil and propagate through the forward and reverse segments in opposite directions.

FIG. 1 depicts a coil 100 having 28 layers, each layer consisting of a number of turns of oppositely wound fiber segments. For the sake of this description, turns of the forward fiber segment are depicted as extending away from the viewer and identified by X's and turns of the reverse segment are depicted as extending toward the viewer and are referred to as O's. The coil 100 shown in FIG. 1 has a first layer (1) having an odd number of turns, e.g., 99 turns. The turns extend in opposite direction from the midpoint of the fiber, represented by M, toward the opposing flanges 104, 106. The next layer (2) has an even number of alternate, oppositely directed turns of the optical fiber. The outermost turns of that layer are preferably displaced from each of the flanges 104, 106 by a distance of approximately one-half of the diameter of the fiber such that the second layer has one fewer turn than the first layer. This arrangement of layers is repeated such that all even numbered layers have one fewer turn than the odd numbered layers. This allows the fiber turns of the next layer to be positioned in the naturally formed grooves between adjacent turns of the previous layer. This arrangement of layers lends stability to the coil. It also tends to reduce the overall coil diameter, which is important in space craft and other applications with substantial space limitations. Adjacent turns may be spaced apart by a selected distance to form more pronounced and deeper grooves for the turns of the next layer.

As depicted in FIG. 1, the first layer, layer 1, consists of half of each of the forward and reverse segments. After the first layer, a particular pattern of forward and reverse segment turns is developed. The pattern of turns in the layers shown in FIG. 1 is such that it is repeated every fourth layer. The pattern of turns in each of the layers 2 through 5 is unique with respect to any of the preceding layers. After layer 5, however, the pattern of turns in layers 2 through 5 is repeated in subsequent groups of four layers. Thus, layer 6 has the same pattern of turns as layer 2. The other layers shown in FIG. 1, layer 28, has the same pattern as layer 4.

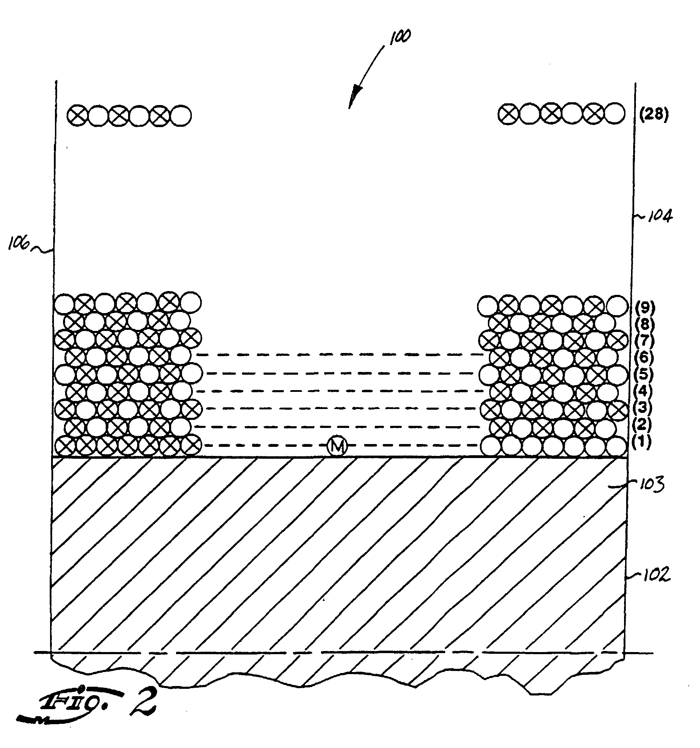

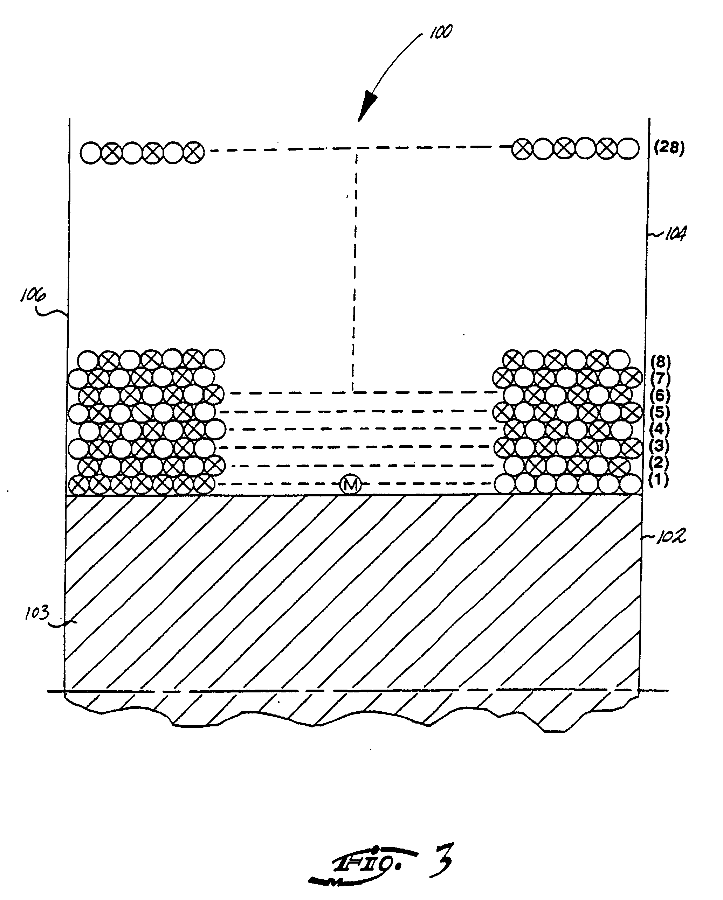

Other patterns of alternating turns of the forward and reverse segment may be created. In the pattern shown in FIG. 2, the even rows, e.g. 2, 4, 6, all have the same turns pattern, whereas the odd numbered layers, i.e., 3, 5, 7, and 9 have alternating turns patterns. Thus the pattern of layer 3 is repeated in layers 7, 11, etc., and the pattern of layer 5 is repeated in layers 9, 13, etc. Other patterns, besides those shown in FIG. 1 and FIG. 2 can be readily envisioned. The pattern shown in FIG. 1 and FIG. 2 are for an arrangement in which the first layer adjacent to the core 103 has an odd number of turns. FIG. 3 shows an arrangement wherein the first layer, layer 1, has an even number of turns. In that configuration, the odd numbered layers, i.e., 3, 5, etc., have the same turns pattern and the even numbered layers, i.e., 2, 4, 6, etc., have alternating patterns. These turns patterns are repeated in every fourth layer. Thus, layer 6 has the same pattern as layer 2, layer 8 has the same pattern as layer 4, and so on. The formation of the turns patterns in the layers is a function of the method of winding the coil 100.

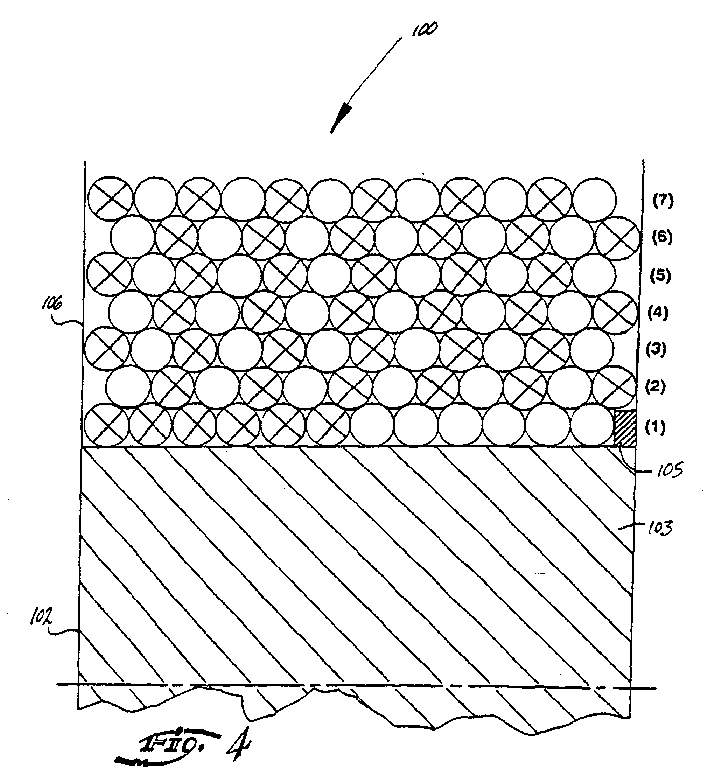

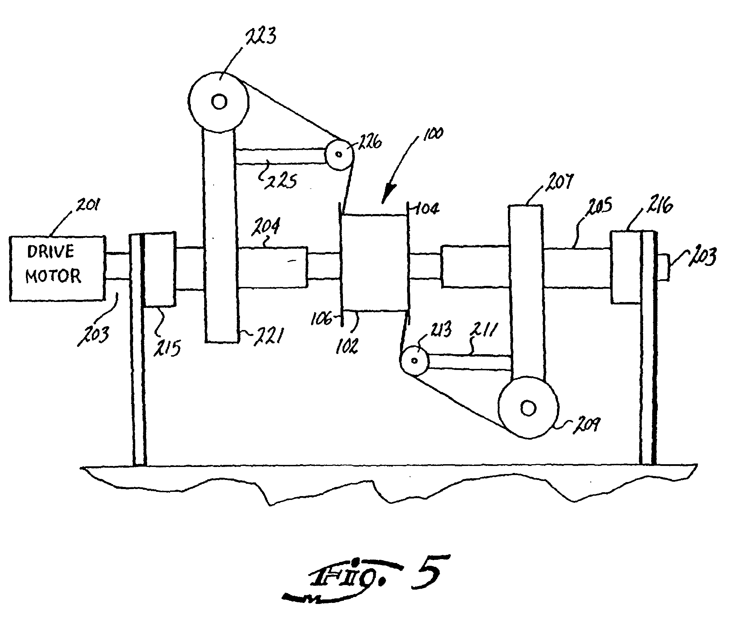

FIG. 4 is a cross-sectional schematic representation of a part of a sensing coil 100 wound in a fashion such that all layers have the same number of turns while the fiber turns of adjacent layers are laterally displaced from each other by a distance approximately equal to one-half of the fiber diameter. In this particular configuration, the even numbered layers have corresponding configurations of forward and reverse segment turns and the odd numbered layers, beginning with the third layer, have corresponding configurations of forward and reverse segment turns. The total number of turns in each layer may be even or odd. In the arrangement of FIG. 5, the first layer is displaced from the right flange 104 by a distance substantially equal to one-half fiber diameter. A spacer 105, having a lateral dimension of approximately one-half the fiber diameter, is provided adjacent to core 103 and the right flange 104 to provide the desired spacing of the right most turn of the first layer from the right flange 104. Layer 2 is displaced from the left flange 106 by a distance substantially equal to one-half the fiber diameter with turns of the second layer disposed in the grooves formed by the turns of the first layer. Subsequent layers are alternately spaced away from the right flange 104 and the left flange 106 to maintain the one-half fiber diameter offset between adjacent layers.

FIG. 5 is a schematic representation of an apparatus for winding the coil 100. As shown in FIG. 5, the spool 102 is mounted on a drive shaft 204 driven by a drive motor 203. When a fiber is to be wound around the coil 100, the fiber is first wound, starting with opposite ends of the fiber, on two separate supply spools 209 and 223. The supply spools 209 and 223 are mounted on left and right support brackets 207 and 221, respectively. In a preferred method of winding the coil 100, the length of fiber on one of the supply spools, e.g the right supply spool 209, is equal to one-half of the total length of the fiber plus the length corresponding to one half of the first layer, layer 1. The midpoint between the two supply spools may be placed adjacent one of the flanges, for example, the left flange 106 and wound across to the right flange 104. The midpoint of the length of fiber will then be positioned substantially in alignment with the midpoint of the spool 102, as depicted in FIG. 1. Thereafter, the remainder of the coil 100 is wound from the two supply spools 209 and 223.

The left and right support brackets 221 and 207 are attached to the corresponding left and right shaft sections 204 and 205, respectively. Clutches 215 and 216 are provided to selectively engage shaft sections 204 and 205, respectively, with drive shaft 203 for rotation with the spool 102. The optical fiber from supply spool 209 on bracket 207 is fed via a roller 213 to the spool 102. The roller 213 is supported by means of a bracket 211 attached to the bracket 207. In a similar fashion, bracket 225 connected to bracket 221 supports a roller 226 to guide the optical fiber from spool 223 on bracket 221 to the coil 100. When the coil 100 is to be wound from supply spool 209 mounted on the right bracket 207, the left clutch 215 is engaged to lock the left shaft section 204 and bracket 221 to drive shaft 203 for rotation with the spool 102. The right clutch is disengaged from drive shaft 204 and is held in a fixed position. Similarly, when the spool 100 is to be wound from supply spool 223 on bracket 221, clutch 216 is engaged to lock the right shaft section 205 and bracket 207 to drive shaft 203 for rotation with the spool 102. Clutch 215 is disengaged and bracket 221 is held stationary. Motor 201 is reversible to allow coil 100 to be turned in either the clockwise or counterclockwise direction.

Because each layer, except layer 1, comprises both a forward and a reverse segment, a crossover will occur at the start of the winding of the second half of each layer, since the turns of the second half are positioned in the spaces formed between the turns of the first half of the layer. The crossover occurs once per layer and at either the right flange 104 or the left flange 106. To prevent interference between the fibers from the two separate supply spools, the supply spools 209 and 223 are removed and their positions interchanged with each crossover.

The procedure for winding the coil 100 to obtain the pattern shown in FIG. 1, using the apparatus represented in FIG. 5, is described further below. In the following description, the spool 223 will be referred to as the X spool, representing the forward segment, and the spool 209 will be referred to as the O spool, representing the reverse segment of the optical fiber sensing coil 100. As shown in FIGS. 1 through 4, the turns in adjacent layers are offset from each other. This facilitates the winding process, as outlined below, by causing turns of a next layer to follow grooves provided in the preceding layer. This is especially helpful in forming a spaced-apart turns pattern wherein adjacent turns are spaced apart by a distance equal to or slightly greater than the diameter of the fiber, as described further below.

The procedure for winding a coil in the configuration is shown in FIG. 1, comprises the following steps:
1. Winding the reverse segment O, supply spool with a length of fiber corresponding to one-half of the total length of the fiber plus the length required to form one-half of the first layer of the coil on the spool 102, and mark the endpoint of that segment.
2. Winding the remainder of the optical fiber on the forward segment X, supply spool.
3. Placing the X spool on the left feed bracket 221 and placing the O spool on the right feed bracket 207.
4. Starting with the marked position of the optical fiber adjacent the left flange 106 of spool 100, winding the first layer from the O supply spool in the counterclockwise direction, moving from left to right, to complete the first layer.
5. Winding one revolution in the counterclockwise direction from the O supply spool, adjacent the right flange 104, as part of the second layer.
6. Winding a spaced-apart alternate turns pattern in the clockwise direction from the X supply spool, moving from left to right.
7. Interchanging the X and O supply spools by moving the O supply spool from the right bracket 207 to the left bracket 221 and moving the X spool from the left bracket 221 to the right bracket 207.
8. Winding an alternate turns pattern in the counterclockwise direction from the O supply spool between the turns of the alternating pattern of X fiber, moving from right to left, to complete the second layer.
9. Winding a spaced-apart alternate turns pattern in the clockwise direction from the X supply spool, moving from right to left.
10. Interchanging the X and O supply spools by moving the X supply spool to the left bracket 221 and the O supply spool to the right bracket 207.
11. Winding an alternate turns pattern between the alternate turns of X fiber in the counterclockwise direction from the O supply spool, moving from left to right, to complete the third layer.
12. Winding a spaced-apart alternate turns pattern in the clockwise direction from the X supply spool, moving from left to right.
13. Interchanging the X and O supply spools by moving the X supply spool to the right bracket 207 and the O supply spool to the left bracket 221.
14. Winding an alternate turns pattern between the alternate turns of X fiber in the counterclockwise direction from the O supply spool, moving from right to left, to complete the fourth layer.
15. winding a spaced-apart alternate turns pattern in the counterclockwise direction from the O supply spool, moving left to right.
16. Interchanging the X and O supply spools by moving the X supply spool to the left bracket 221 and the O supply spool to the right bracket 207.
17. Winding an alternate turns patter between the alternate turns of the O fiber in the clockwise direction from the X spool, moving from right to left, to complete the fifth layer.
18. Repeating steps 5 through 17 for each of the groups of 4 layers (6) through (9), (10) through (13), etc., until the coil is completed.

It will be understood that the above-described arrangement is merely illustrative of the application of the principles of the invention and that numerous other arrangements may be devised by those skilled in the art without departing from the spirit and scope of the invention.

## Claims

1. A substantially symmetrically wound coil (100) of optical fiber comprising:
a plurality of turns of a first segment of an optical fiber wound in a clockwise direction and a plurality of turns of a second segment of said optical fiber wound in the counterclockwise direction;
wherein the first and second segments each terminate in an end point and meet at a midpoint of the optical fiber substantially equidistant from the end points, and the turns of the first segment and of the second segment together form a plurality of superimposed layers of turns of optical fiber and wherein the innermost layer has opposite ends, wherein the midpoint of the optical fiber is disposed between the opposite ends of the inner layer and substantially equidistant from the opposite ends of the inner layer,
**characterized in that** at least one of the remaining layers solely comprises alternate, adjacent turns of the first and second segments of optical fiber.

2. The coil in accordance with claim 1 and comprising an inner layer having a plurality of turns of the first segment and of the second segment and second, third and fourth layers each having alternate, adjacent turns of the first and second segments and wherein the positions of the turns of the first segment and of the second segments in the fourth layer, correspond exactly to the positions of the turns of the respective segments in the second layer.

3. The coil in accordance with claim 1 and further comprising second, third, fourth and fifth layers of alternate, adjacent turns of the first and second segments and wherein the positions of the turns of the first segment in the fifth layer correspond exactly to the positions of turns of the second segment in the third layer and wherein the positions of turns of the second segment in the fifth layer correspond exactly to the positions of turns of the first segment in the third layer.

4. The coil in accordance with claim 1 and further comprising a second and a third layer and a plurality of additional layers of alternate, adjacent turns of the first and second segments and wherein turns of the first and second segments in even numbered layers correspond in position exactly to the position of turns of the respective segments in the second layer and wherein turns of the first and second segments in odd numbered layers correspond in position exactly to the positions of turns of the respective segments of the third and fifth layers.

5. The coil in accordance with claim 4 wherein the inner layer comprises an even number of turns of the optical fiber.

6. The coil in accordance with claim 1, wherein the turns of the first segment and of the second segment together forming each layer of a plurality of layers of the optical fiber, the fibers thereby forming grooves formed between immediately adjacent turns in each layer; the turns of each layer of the optical fiber being partially disposed in the grooves formed in an adjacent layer.

7. The coil in accordance with claim 6, wherein adjacent layers have alternating odd and even numbers of turns.

8. The coil in accordance with claim 6 and comprising a spool with laterally spaced-apart side flanges and wherein adjacent layers have equal numbers of turns and each layer is laterally displaced from one of the side flanges by a distance substantially equal to one-half the diameter of the circular cross-section.

9. A method of forming an optical fiber sensing coil (100) comprising a plurality of layers formed by winding an optical fiber of predetermined length and diameter on a spool having axially spaced apart side flanges, the fiber having a forward segment and a rearward segment, the method comprising the steps of:
forming a first layer by winding a portion of the fiber on the spool such that portions of the forward and rearward segments are disposed adjacent opposite side flanges; forming a second layer by winding the turns of the forward segment in a first rotational direction and winding the turns of the rearward segment in a second rotational direction, opposite to the first rotational direction
**characterized in that** the step of forming a second layer comprises winding a portion of the forward segment in an adjacent turn pattern on the first layer such that all the adjacent turns of the forward segment are spaced apart by a distance substantially equal to the diameter of the optical fiber and winding a portion of the rearward segment in a turn pattern on the first layer between the turns of the turn pattern of the forward segment.

10. The method in accordance with claim 9, wherein the spool comprises a spool midpoint disposed axially equidistant from the side flanges, and the fiber has opposite ends and a fiber midpoint substantially equidistant from the opposite ends with the forward and rearward segments extending in opposite directions from the fiber midpoint, and wherein the step of forming the first layer comprises winding the first layer such that the fiber midpoint is in substantial alignment with the spool midpoint.

11. The method in accordance with claim 9, and further comprising the step of forming additional layers with each layer comprising alternate turns of the forward segment and of the rearward segment.

12. The method in accordance with claim 11, wherein the steps of forming the second layer and the additional layers comprises forming a coil of adjacent layers with alternating odd and even numbers of turns.

13. The method in accordance with claim 12, wherein the steps of forming the second layer and the additional layers comprises winding a next layer such that the turns of the next layer are disposed in grooves formed by the turns of the immediately preceding layer.

14. The method in accordance with claim 9 and further comprising the step of winding an additional turn of the rearward segment adjacent one of the flanges to form a turn of a second layer before the step of forming the second layer.

15. The method in accordance with claim 9, wherein the step of forming the first layer comprises forming an odd number of turns of the optical fiber and the step of forming the second layer comprises forming an even number of turns of the optical fiber and the step of forming the second layer comprises forming an even number of turns of the optical fiber.

16. The method in accordance with claim 9 and further comprising the step of forming a third layer of alternate turns of the forward segment and of the rearward segments and the step of forming a fourth layer of alternating turns of the forward and rearward segments such that the turns of the forward and rearward segments in the fourth layer, relative to the side flanges, correspond exactly in position to the turns of the second layer, relative to the side flanges.

17. The method in accordance with claim 16, wherein the step of forming the fourth layer of alternate turns of the forward segment and the rearward segments such that the position of the turns of the forward segment of the fourth layer, relative to the side flanges, correspond exactly to the position of the turns of the rearward segment of the second layer,
relative to the side flanges, and the position of the turns of the rearward segment of the fourth layer, relative to the side flanges, corresponds exactly to the position of the turns of the forward segment of the second layer, relative to the side flanges.

18. The method in accordance with claim 17 and further comprising the step of forming a fifth layer such that the position of the turns of the forward segment of the fifth layer, relative to the side flanges, correspond exactly to the position of the turns of the rearward segment of the third layer, relative to the side flanges and the position of the turns of the rearward segment of the fifth layer, relative to the flanges, correspond exactly to the position of the turns of the forward segment of the third layer, relative to the flanges.

19. The method in accordance with claim 18 and further comprising the steps of forming sixth, seventh, eighth and ninth layers of alternate turns of the forward and rearward segments such that the positions of the turns of the forward and rearward segments of the sixth layer, relative to the side flanges, correspond exactly to the position of the turns of the respective segments of the second layer,
relative to the side flanges, and the positions of the turns of the forward and reverse segments of the seventh layer, relative to the side flanges, correspond exactly to the positions of the turns of the respective segments of the third layer and the positions of the turns of the forward and rearward segments of the eighth layer, relative to the side flanges, correspond exactly to the positions of the turns of the respective segments of the fourth layer, relative to the side flanges, and the positions of the turns of the forward and rearward segments of the ninth layer, relative to the side flanges, correspond exactly to the position of the turns of the respective segments of the fifth layer, relative to the side flanges.

## Patentansprüche

1. Im wesentlichen symmetrisch gewickelte Spule (100) aus Lichtwellenleiter, umfassend:
mehrere im Uhrzeigersinn gewickelte Windungen eines ersten Segments eines Lichtwellenleiters und mehrere entgegengesetzt dem Uhrzeigersinn gewickelte Windungen eines zweiten Segments des Lichtwellenleiters;
wobei das erste und zweite Segment jeweils an einem Endpunkt enden und sich an einem von den Endpunkten im wesentlichen äquidistanten Mittelpunkt des Lichtwellenleiters treffen und die Windungen des ersten Segments und zweiten Segments zusammen mehrere überlagerte Schichten von Windungen aus Lichtwellenleiter bilden und wobei die innerste Schicht gegenüberliegende Enden aufweist, wobei der Mittelpunkt des Lichtwellenleiters zwischen den gegenüberliegenden Enden der inneren Schicht und im wesentlichen äquidistant von den gegenüberliegenden Enden der inneren Schicht angeordnet ist,
**dadurch gekennzeichnet, daß** mindestens eine der verbleibenden Schichten ausschließlich abwechselnde benachbarte Windungen des ersten und zweiten Segments aus Lichtwellenleiter umfaßt.

2. Spule nach Anspruch 1 mit einer inneren Schicht mit mehreren Windungen des ersten Segments und des zweiten Segments und einer zweiten, dritten und vierten Schicht mit jeweils abwechselnden benachbarten Windungen des ersten und zweiten Segments und wobei die Positionen der Windungen des ersten Segments und der zweiten Segmente in der vierten Schicht genau den Positionen der Windungen der jeweiligen Segmente in der zweiten Schicht entsprechen.

3. Spule nach Anspruch 1, weiterhin mit einer zweiten, dritten, vierten und fünften Schicht aus abwechselnden benachbarten Windungen des ersten und zweiten Segments, wobei die Positionen der Windungen des ersten Segments in der fünften Schicht genau den Positionen der Windungen des zweiten Segments in der dritten Schicht entsprechen und wobei die Positionen der Windungen des zweiten Segments in der fünften Schicht genau den Positionen der Windungen des ersten Segments in der dritten Schicht entsprechen.

4. Spule nach Anspruch 1, weiterhin mit einer zweiten und einer dritten Schicht und mehreren zusätzlichen Schichten aus abwechselnden benachbarten Windungen des ersten und zweiten Segments, wobei Windungen des ersten und zweiten Segments in geradzahligen Schichten hinsichtlich der Position genau der Position der Windungen der jeweiligen Segmente in der zweiten Schicht entsprechen und wobei Windungen des ersten und zweiten Segments in ungeradzahligen Schichten hinsichtlich der Position genau den Positionen der Windungen der jeweiligen Segmente der dritten und fünften Schicht entsprechen.

5. Spule nach Anspruch 4, wobei die innere Schicht eine gerade Anzahl von Windungen aus dem Lichtwellenleiter umfaßt.

6. Spule nach Anspruch 1, wobei die Windungen des ersten Segments und des zweiten Segments zusammen jede Schicht von mehreren Schichten aus dem Lichtwellenleiter bilden, wodurch die Fasern zwischen unmittelbar benachbarten Windungen in jeder Schicht ausgebildete Nuten bilden;
wobei die Windungen jeder Schicht aus dem Lichtwellenleiter teilweise in den in einer benachbarten Schicht ausgebildeten Nuten angeordnet sind.

7. Spule nach Anspruch 6, wobei benachbarte Schichten abwechselnd eine ungerade und gerade Anzahl von Windungen aufweisen.

8. Spule nach Anspruch 6 mit einem Wickelkörper mit seitlich beabstandeten Seitenflanschen, wobei benachbarte Schichten eine gleiche Anzahl von Windungen aufweisen und jede Schicht von einem der Seitenflansche seitlich mit einem Abstand beabstandet ist, der im wesentlichen gleich dem halben Durchmesser des kreisförmigen Querschnitts ist.

9. Verfahren zum Ausbilden einer faseroptischen Meßspule (100), die aus mehreren Schichten besteht, die durch Aufwickeln eines Lichtwellenleiters vorbestimmter Länge und vorbestimmten Durchmessers auf einen Wickelkörper mit axial beabstandeten Seitenflanschen ausgebildet werden, wobei die Faser ein vorderes Segment und ein hinteres Segment aufweist, wobei das Verfahren die folgenden Schritte umfaßt:
Ausbilden einer ersten Schicht durch Aufwickeln eines Teils der Faser auf den Wickelkörper derart, daß Teile des vorderen und hinteren Segments neben benachbarten gegenüberliegenden Seitenflanschen angeordnet sind; Ausbilden einer zweiten Schicht durch Wickeln der Windungen des vorderen Segments in einer ersten Drehrichtung und Wickeln des hinteren Segments in einer der ersten Drehrichtung entgegengesetzten zweiten Drehrichtung; **dadurch gekennzeichnet, daß** der Schritt des Ausbildens einer zweiten Schicht umfaßt, einen Teil des vorderen Segments in einem benachbarten Windungsmuster derart auf die erste Schicht zu wickeln, daß alle benachbarten Windungen des vorderen Segments mit einem Abstand beabstandet sind, der im wesentlichen gleich dem Durchmesser des Lichtwellenleiters ist, und einen Teil des hinteren Segments in einem Windungsmuster auf die erste Schicht zwischen die Windungen des Windungsmusters des vorderen Segments zu wickeln.

10. Verfahren nach Anspruch 9, wobei der Wickelkörper einen axial äquidistant von den Seitenflanschen angeordneten Wickelkörpermittelpunkt umfaßt und die Faser gegenüberliegende Enden und einen im wesentlichen äquidistant von den gegenüberliegenden Enden angeordneten Fasermittelpunkt aufweist, wobei sich das vordere und hintere Segment von dem Fasermittelpunkt aus in entgegengesetzte Richtungen erstrecken und wobei bei dem Schritt des Ausbildens der ersten Schicht die erste Schicht derart gewickelt wird, daß der Fasermittelpunkt im wesentlichen auf den Wickelkörpermittelpunkt ausgerichtet ist.

11. Verfahren nach Anspruch 9, weiterhin mit dem Schritt, zusätzliche Schichten auszubilden, wobei jede Schicht abwechselnd Windungen des vorderen Segments und des hinteren Segments umfaßt.

12. Verfahren nach Anspruch 11, wobei die Schritte, die zweite Schicht und die zusätzlichen Schichten auszubilden, das Ausbilden einer Spule aus benachbarten Schichten mit abwechselnd einer ungeraden und einer geraden Anzahl von Windungen umfassen.

13. Verfahren nach Anspruch 12, wobei die Schritte, die zweite Schicht und die zusätzlichen Schichten auszubilden, umfassen, eine nächste Schicht derart aufzuwickeln, daß die Windungen der nächsten Schicht in Nuten angeordnet sind, die durch die Windungen der unmittelbar vorausgegangenen Schicht gebildet werden.

14. Verfahren nach Anspruch 9, weiterhin mit dem Schritt, vor dem Schritt des Ausbildens der zweiten Schicht eine zusätzliche Windung des hinteren Segments neben einem der Flansche zu wickeln, um eine Windung aus einer zweiten Schicht auszubilden.

15. Verfahren nach Anspruch 9, wobei bei dem Schritt des Ausbildens der ersten Schicht eine ungerade Anzahl von Windungen des Lichtwellenleiters und bei dem Schritt des Ausbildens der zweiten Schicht eine gerade Anzahl von Windungen des Lichtwellenleiters ausgebildet wird.

16. Verfahren nach Anspruch 9, weiterhin mit dem Schritt, eine dritte Schicht aus abwechselnden Windungen des vorderen Segments und der hinteren Segmente auszubilden, und dem Schritt, eine vierte Schicht aus abwechselnden Windungen der vorderen und hinteren Segmente derart auszubilden, daß die Windungen des vorderen und hinteren Segments in der vierten Schicht relativ zu den Seitenflanschen hinsichtlich der Position genau den Windungen der zweiten Schicht relativ zu den Seitenflanschen entsprechen.

17. Verfahren nach Anspruch 16, wobei der Schritt, die vierte Schicht aus abwechselnden Windungen des vorderen Segments und der hinteren Segmente derart auszubilden, daß die Position der Windungen des vorderen Segments der vierten Schicht relativ zu den Seitenflanschen genau der Position der Windungen des hinteren Segments der zweiten Schicht relativ zu den Seitenflanschen entspricht die Position der Windungen des hinteren Segments der vierten Schicht relativ zu den Seitenflanschen genau der Position der Windungen des vorderen Segments der zweiten Schicht relativ zu den Seitenflanschen entspricht.

18. Verfahren nach Anspruch 17, weiterhin mit dem Schritt, eine fünfte Schicht derart auszubilden, daß die Position der Windungen des vorderen Segments der fünften Schicht relativ zu den Seitenflanschen genau der Position der Windungen des hinteren Segments der dritten Schicht relativ zu den Seitenflanschen und die Position der Windungen des hinteren Segments der fünften Schicht relativ zu den Flanschen genau der Position der Windungen des vorderen Segments der dritten Schicht relativ zu den Flanschen entsprechen.

19. Verfahren nach Anspruch 18, weiterhin mit den Schritten, eine sechste, siebte, achte und neunte Schicht aus abwechselnden Windungen des vorderen und hinteren Segments derart auszubilden, daß die Positionen der Windungen des vorderen und hinteren Segments der sechsten Schicht relativ zu den Seitenflanschen genau der Position der Windungen der jeweiligen Segmente der zweiten Schicht relativ zu den Seitenflanschen entsprechen und die Positionen der Windungen des vorderen und hinteren Segments der siebten Schicht relativ zu den Seitenflanschen genau den Positionen der Windungen der jeweiligen Segmente der dritten Schicht entsprechen und die Positionen der Windungen des vorderen und hinteren Segments der achten Schicht relativ zu den Seitenflanschen genau den Positionen der Windungen der jeweiligen Segmente der vierten Schicht relativ zu den Seitenflanschen entsprechen und die Positionen der Windungen des vorderen und hinteren Segments der neunten Schicht relativ zu den Seitenflanschen genau der Position der Windungen der jeweiligen Segmente der fünften Schicht relativ zu den Seitenflanschen entsprechen.

## Revendications

1. Bobine de fibre optique (100) enroulée de manière essentiellement symétrique comprenant :
une pluralité de tours d'un premier segment d'une fibre optique enroulés dans le sens des aiguilles d'une montre et une pluralité de tours d'un deuxième segment de ladite fibre optique enroulés dans le sens inverse des aiguilles d'une montre ;
dans laquelle le premier et le deuxième segment se terminent chacun en un point d'extrémité et se rencontrent en un point central de la fibre optique qui est pratiquement équidistant des points d'extrémité et les tours du premier segment et du deuxième segment forment ensemble une pluralité de couches superposées de tours de fibre optique et dans laquelle la couche la plus à l'intérieur a des extrémités opposées, dans laquelle le point central de la fibre optique est disposé entre les extrémités opposées de la couche intérieure et pratiquement à distances égales des extrémités opposées de la couche intérieure,
**caractérisée en ce qu'**au moins une des couches restantes comprend uniquement des tours alternés voisins du premier et du deuxième segment de fibre optique.

2. Bobine selon la revendication 1 et comprenant une couche intérieure ayant une pluralité de tours du premier segment et du deuxième segment et une deuxième, troisième et quatrième couche ayant chacune des tours alternés voisins du premier et deuxième segment et dans laquelle la position des tours du premier segment et du deuxième segment dans la quatrième couche correspond exactement à la position des tours des segments respectifs dans la deuxième couche.

3. Bobine selon la revendication 1 et comprenant en plus une deuxième, troisième, quatrième et cinquième couche de tours alternés voisins du premier et du deuxième segment et dans laquelle la position des tours du premier segment dans la cinquième couche correspond exactement à la position des tours du deuxième segment dans la troisième couche et dans laquelle la position des tours du deuxième segment dans la cinquième couche correspond exactement à la position des tours du premier segment dans la troisième couche.

4. Bobine selon la revendication 1 et comprenant en plus une deuxième et une troisième couche et une pluralité de couches supplémentaires de tours alternés voisins du premier et du deuxième segment et dans laquelle la position des tours du premier et du deuxième segment dans les couches paires correspond exactement à la position des tours des segments respectifs dans la deuxième couche et dans laquelle la position des tours du premier et du deuxième segment dans les couches impaires correspond exactement à la position des tours des segments respectifs de la troisième et la cinquième couche.

5. Bobine selon la revendication 4 dans laquelle la couche intérieure comprend un nombre pair de tours de fibre optique.

6. Bobine selon la revendication 1, dans laquelle les tours du premier segment et du deuxième segment formant ensemble chaque couche d'une pluralité de couches de la fibre optique, les fibres formant ainsi des rainures formées entre les tours immédiatement voisins dans chaque couche, les tours de chaque couche de la fibre optique étant partiellement disposés dans les rainures formées dans une couche voisine.

7. Bobine selon la revendication 6, dans laquelle les couches voisines ont des nombres de tours alternativement pairs et impairs.

8. Bobine selon la revendication 6 et comprenant un rouleau avec des flasques latéraux espacés latéralement et dans laquelle les couchés voisines ont des nombres égaux de tours et chaque couche est déplacée latéralement par rapport à l'un des flasques latéraux sur une distance à peu près égale à la moitié du diamètre de la section transversale circulaire.

9. Procédé pour former une bobine de détection en fibre optique (100) comprenant une pluralité de couches formées en enroulant une fibre optique de longueur et de diamètre prédéterminés sur un rouleau muni de flasques latéraux séparés dans le sens axial, la fibre ayant un segment aller et un segment retour, le procédé comprenant les étapes consistant à :
former une première couche en enroulant une portion de la fibre sur le rouleau de manière à ce que des portions du segment aller et du segment retour soient disposées à côté des flasques latéraux opposés, former une deuxième couche en enroulant les tours du segment aller dans un premier sens de rotation et en enroulant les tours du segment retour dans un deuxième sens de rotation, opposé au premier sens de rotation,
**caractérisé en ce que** l'étape consistant à former une deuxième couche comprend l'enroulement d'une portion du segment aller selon un modèle de tour adjacent sur la première couche de manière à ce que tous les tours voisins du segment aller soient espacés les uns des autres d'une distance pratiquement égale au diamètre de la fibre optique et l'enroulement d'une portion du segment retour selon un modèle de tour sur la première couche entre les tours du modèle de tour du segment aller.

10. Procédé selon la revendication 9, dans lequel le rouleau comprend un point central de rouleau disposé à distance axiale égale des flasques latéraux et la fibre possède des extrémités opposées et un point central de fibre pratiquement équidistant des extrémités opposées, le segment aller et retour s'étendant dans des directions opposées à partir du point central de la fibre, et dans lequel l'étape consistant à former la première couche comprend l'enroulement de la première couche de manière à ce que le point central de la fibre soit pratiquement aligné avec le point central du rouleau.

11. Procédé selon la revendication 9, comprenant en plus l'étape consistant à former des couches supplémentaires, chaque couche comprenant des tours alternés du segment aller et du segment retour.

12. Procédé selon la revendication 11, dans lequel les étapes consistant à former la deuxième couche et les couches supplémentaires comprennent la formation d'une bobine de couches voisines avec des nombres de tours alternativement pairs et impairs.

13. Procédé selon la revendication 12, dans lequel les étapes consistant à former la deuxième couche et les couches supplémentaires comprennent l'enroulement d'une couche suivante de manière à ce que les tours de la couche suivante soient disposés dans des rainures formées par les tours de la couche immédiatement précédente.

14. Procédé selon la revendication 9 et comprenant en plus l'étape consistant à enrouler un tour supplémentaire du segment retour à côté de l'un des flasques pour former un tour d'une deuxième couche avant l'étape consistant à former la deuxième couche.

15. Procédé selon la revendication 9, dans lequel l'étape consistant à former la première couche comprend la formation d'un nombre impair de tours de fibre optique et l'étape consistant à former la deuxième couche comprenant la formation d'un nombre pair de tours de fibre optique et l'étape consistant à former la deuxième couche comprend la formation d'un nombre pair de tours de la fibre optique.

16. Procédé selon la revendication 9 et comprenant en plus l'étape consistant à former une troisième couche de tours alternés du segment aller et du segment retour et l'étape consistant à former une quatrième couche de tours alternés du segment aller et du ségment retour de manière à ce que la position des tours des segments aller et retour dans la quatrième couche par rapport aux flasques latéraux corresponde exactement à la position des tours de la deuxième couche par rapport aux flasques latéraux.

17. Procédé selon la revendication 16, dans lequel l'étape consistant à former la quatrième couche de tours alternés du segment aller et du segment retour de manière à ce que la position des tours du segment aller dans la quatrième couche par rapport aux flasques latéraux corresponde exactement à la position des tours du segment retour de la deuxième couche par rapport aux flasques latéraux et la position des tours du segment retour dans la quatrième couche par rapport aux flasques latéraux corresponde exactement à la position des tours du segment aller de la deuxième couche par rapport aux flasques latéraux.

18. Procédé selon la revendication 17 et comprenant en plus l'étape consistant à former une cinquième couche de manière à ce que la position des tours du segment aller dans la cinquième couche par rapport aux flasques latéraux corresponde exactement à la position des tours du segment retour de la troisième couche par rapport aux flasques latéraux et la position des tours du segment retour dans la cinquième couche par rapport aux flasques latéraux corresponde exactement à la position des tours du segment aller de la troisième couche par rapport aux flasques.

19. Procédé selon la revendication 18 et comprenant en plus les étapes consistant à former une sixième, une septième, une huitième et une neuvième couche de tours alternés des segments aller et retour de manière à ce que la position des tours des segments aller et retour de la sixième couche par rapport aux flasques latéraux corresponde exactement à la position des tours des segments respectifs de la deuxième couche par rapport aux flasques latéraux et à ce que la position des tours des segments aller et retour de la septième couche par rapport aux flasques latéraux corresponde exactement à la position des tours des segments respectifs de la troisième couche et à ce que la position la position des tours des segments aller et retour de la huitième couche par rapport aux flasques latéraux corresponde exactement à la position des tours des segments respectifs de la quatrième couche par rapport aux flasques latéraux et à ce que la position des tours des segments aller et retour de la neuvième couche par rapport aux flasques latéraux corresponde exactement à la position des tours des segments respectifs de la cinquième couche par rapport aux flasques latéraux.
